# EUROPÄISCHE PATENTANMELDUNG

(11) **EP 4 464 620 A2**
(43) Veröffentlichungstag der Anmeldung: **20.11.2024**
(21) Anmeldenummer: 24170973.2
(22) Anmeldetag: 18.04.2024
(51) Int. Cl.: B65D 75/44, B65B 3/30

(54) **PORTIONSBEUTEL UND VERPACKUNGSMASCHINE**

(30) Priorität: 25.04.2023 DE 202023102198 U
(71) Anmelder: Merz Verpackungsmaschinen GmbH, 35423 Lich (DE)
(72) Erfinder: KETELS, Christian, 35410 Hungen (DE)
(74) Vertreter: advotec.

(57) **Zusammenfassung**

Die Erfindung betrifft einen Portionsbeutel (10) ausbildend eine verschlossene Kammer (12), in der eine, insbesondere zumindest teilweise flüssigkeitslösliche, Produktportion aufgenommenen ist, wobei der Portionsbeutel (10) aus einer zu einem Schlauch (16) geformten Folienbahn (18) ausgebildet ist, wobei eine Schweißnaht in einer Längsrichtung entlang des Portionsbeutels (10) ausgebildet ist, und wobei an Enden (22) des Portionsbeutels (10) jeweils Verschlussnähte (24, 26) ausgebildet sind, wobei ein aus einer Lebensmittelfarbe ausgebildeter Aufdruck (28) auf zumindest eine Sichtfläche (30) des Portionsbeutels (10) aufgebracht ist. Zudem betrifft die Erfindung ein Verfahren sowie eine Verpackungsmaschine zur Ausbildung eines Portionsbeutels.

## Beschreibung

Die Erfindung betrifft einen Portionsbeutel und eine Verpackungsmaschine zur Ausbildung von Portionsbeuteln, wobei der Portionsbeutel eine verschlossene Kammer ausbildet, in der eine Produktportion aufgenommen ist, und wobei der Portionsbeutel aus einer zu einem Schlauch geformten Folienbahn ausgebildet ist, und wobei eine Schweißnaht in einer Längsrichtung entlang des Portionsbeutels ausgebildet ist, und wobei an Enden des Portionsbeutels jeweils Verschlussnähte ausgebildet sind. In einem weiteren Aspekt betrifft die Erfindung ein Verfahren zur Herstellung eines Portionsbeutels.

Derartige Portionsbeutel sind aus dem Stand der Technik hinreichend bekannt und werden unter anderem auch als Schlauchbeutel, Kleinstschlauchbeutel oder Stickpacks bezeichnet. Kleinstschlauchbeutel bzw. Stickpacks dienen zur Verpackung kleiner Produkte bzw. Produktportionen. Dies können beispielsweise Flüssigkeiten, Pulver, Granulate oder kleine Stückgüter, wie Reagenzien, Arzneipulver, Tabletten etc. sein. Zur Herstellung des Portionsbeutels bzw. zu der Verpackung des Produkts im Portionsbeutel wird eine Folienbahn aus einem Kunststoffmaterial bzw. Polymer von einer Rolle abgezogen und über eine Formschulter geführt. Die Formschulter ist so ausgebildet, dass die Folienbahn an der Formschulter derart gefaltet wird, dass gegenüberliegende Längsseiten der Folienbahn zusammengeführt werden und ein Schlauch geformt wird. Die Längsseiten werden dann miteinander verschweißt, so dass eine einzelne Schweißnaht in einer Längsrichtung entlang des Portionsbeutels ausgebildet wird. An einem unteren Ende des Portionsbeutels wird eine Verschlussnaht durch Verschweißen der Folienbahn ausgebildet, so dass über ein Rohr in eine so aus der Folienbahn ausgebildete nach oben hin geöffnete Kammer das Produkt in die Kammer eingebracht werden kann. Die Kammer wird wiederum mit einer Verschlussnaht an einem oberen Ende verschweißt, wobei diese Verschlussnaht gleichzeitig eine Verschlussnaht an einem unteren Ende einer nachfolgenden Kammer ausbilden kann.

Weiter können derartige Produkte auch in sogenannten Flachbeuteln verpackt werden, wobei die Produkte zwischen zwei voneinander unabhängigen Folienbahnen angeordnet und die beiden Folienbahnen durch Ausbildung entsprechender Schweißnähte zu einem Portionsbeutel verschweißt werden. Bei diesen Portionsbeuteln verlaufen Schweißnähte dann umfänglich entlang von Seitenkanten des Portionsbeutels. Nachteilig ist hier, dass zur Ausbildung derartiger Portionsbeutel, bezogen auf einen Verpackungsinhalt, eine vergleichsweise größere Menge an Folie benötigt wird und die Möglichkeit zur Kennzeichnung bzw. Etikettierung des Portionsbeutels durch die Schweißnähte eingeschränkt ist. Alternativ können derartige Produkte oder Produktportionen auch in sogenannte Becherblister oder Blisterkarten verpackt werden. Hierbei ist es jedoch nachteilig, dass für eine Blisterverpackung ein Formwerkzeug angefertigt werden muss und damit eine Größe der Kammer festgelegt ist. Bei einem Portionsbeutel kann hingegen eine Größe einer Kammer variabel unabhängig von einem Formwerkzeug durch Anbringen der Verschlussnähte gewählt werden.

Insbesondere, wenn der Portionsbeutel eine Produktportion zur oralen Einnahme enthält, musste bei gattungsgemäßen Portionsbeuteln auf eine Kennzeichnung bzw. Etikettierung des Portionsbeutels verzichtet werden, um eine Schadstoffbelastung des Verbrauchers und eine Kontamination des Produkts auszuschließen. Zudem können aufgrund der vergleichsweise kleinen Portionsbeutel während des Aufbringens oder des Anbringens einer Kennzeichnung oder Etikettierung Probleme auftreten. So können Wechselwirkungen der Bestandteile der Kennzeichnung mit der in der Kammer des Portionsbeutels aufgenommenen Produktportion die Produktportion unwirksam und/oder unbrauchbar, beispielsweise durch Verklumpung, werden.

Der vorliegenden Erfindung liegt daher die Aufgabe zugrunde, einen Portionsbeutel und ein Verfahren zur Herstellung eines Portionsbeutels sowie eine Verpackungsmaschine vorzuschlagen, mit dem bzw. mit der eine präzise, sichere und einfache Etikettierung eines Portionsbeutels zur Kennzeichnung des Portionsbeutels möglich ist.

Diese Aufgabe wird durch einen Portionsbeutel mit den Merkmalen des Anspruchs 1, eine Verpackungsmaschine mit den Merkmalen des Anspruchs 8 und ein Verfahren mit den Merkmalen des Anspruchs 14 gelöst.

Der erfindungsgemäße Portionsbeutel bildet eine verschlossene Kammer aus, wobei in der Kammer eine, insbesondere zumindest teilweise flüssigkeitslösliche, Produktportion aufgenommen ist, und wobei der Portionsbeutel aus, insbesondere ausschließlich aus, einer zu einem Schlauch geformten Folienbahn ausgebildet ist, und wobei eine Schweißnaht in einer Längsrichtung entlang des Portionsbeutels ausgebildet ist, und wobei an Enden des Portionsbeutels jeweils Verschlussnähte ausgebildet sind. Der erfindungsgemäße Portionsbeutel ist dadurch gekennzeichnet, dass ein aus einer Lebensmittelfarbe ausgebildeter Aufdruck auf zumindest einer Sichtfläche des Portionsbeutels aufgebracht ist. Erfindungsgemäß kann der Portionsbeutel aus einer einzigen Folienbahn aus einem Kunststoffmaterial ausgebildet sein. Daher kann auch alleine eine einzige Schweißnaht in der Längsrichtung entlang des Portionsbeutels ausgebildet sein. Somit sind am Portionsbeutel ausreichend Sichtflächen ausgebildet, die zur Aufbringung einer Etikettierung des Portionsbeutels genutzt werden können, ohne dass eine Schweißnaht die Etikettierung verzerrt oder beeinträchtigt. Im Rahmen der Erfindung betrifft der Begriff "Sichtfläche des Portionsbeutels" jede sichtbare Fläche des Portionsbeutels, also insbesondere dessen Außenflächen. Im Rahmen der Erfindung stellt eine Etikettierung jede denkbare Kennzeichnung oder jedes denkbare Labeling eines Produkts dar, wie beispielsweise Firmenkennzeichen, Markennamen, Produktkennzeichnungen, Strichcodes, Barcodes, QR-Labels o.ä.. Im Rahmen der Erfindung wurde es als vorteilhaft erkannt, dass eine Etikettierung nicht anhand eines vorab zu erstellenden und nachfolgend am Portionsbeutel, beispielsweise durch Aufkleben oder Aufnähen, anzubringenden Etiketts erfolgen muss, sondern dass das Etikett als Aufdruck direkt auf den Portionsbeutel aufgebracht werden kann. Dadurch können bei der Herstellung des Portionsbeutels Arbeitsschritte und Ressourcen eingespart werden. Erfindungsgemäß ist auf die Sichtflächen des Portionsbeutels ein aus einer Lebensmittelfarbe ausgebildeter Aufdruck zur Etikettierung des Portionsbeutels aufgebracht. Dadurch, dass der Aufdruck aus Lebensmittelfarbe ausgebildet ist, kann eine gesundheitsschädliche Kontamination der im Portionsbeutel aufgenommenen Produktportion ausgeschlossen werden. Im Rahmen der Erfindung sind Lebensmittelfarben farbgebende Substanzen, deren orale Einnahme gesundheitlich unbedenklich ist. Bevorzugt sind die zur Herstellung des Aufdrucks verwendeten Lebensmittelfarben zur Verwendung in der Europäischen Union und/oder in Deutschland zugelassen.

Bevorzugt ist der Aufdruck derart auf die Sichtfläche des Portionsbeutels aufgebracht, dass die Lebensmittelfarbe ausschließlich mit dem aus der Folienbahn geformten Portionsbeutel zusammenwirkt, so dass ein Zusammenwirken mit der in der Kammer des Portionsbeutels aufgenommenen Produktportion ausgeschlossen werden kann. Dadurch, dass die Lebensmittelfarbe somit lediglich auf den Portionsbeutel aufgebracht wird und nicht mit der Produktportion im Inneren des Portionsbeutels in Kontakt kommt, kann eine Beeinträchtigung des Inhalts des Portionsbeutels, insbesondere wenn die Produktportion zumindest teilweise wasserlöslich ist, ausgeschlossen werden. Bevorzugt wird der Aufdruck derart aufgebracht, dass die Lebensmittelfarbe eine stoffschlüssige Verbindung mit dem Portionsbeutel, insbesondere an dessen Sichtfläche, eingeht. Hierbei ist es im Rahmen der Erfindung als vorteilhaft erkannt worden, wenn die Folienbahn, aus der der Portionsbeutel gebildet ist, ein Vlies ist. An einem Vlies kann die Lebensmittelfarbe des Aufdrucks in besonders einfacher Art und Weise im Rahmen einer stoffschlüssigen Verbindung gebunden werden. Im Rahmen der Erfindung betrifft der Begriff Vlies ein textiles Produkt, das aus einzelnen Fasern besteht und aus verschiedenen Materialen ausgebildet werden kann. Ein derartiges Vlies kann auch unter den Begriffen "non-woven" oder "non-woven fleece" bekannt sein.

Vorteilhafte Ausführungsformen der Erfindung sind Gegenstand der abhängigen Ansprüche. In den Rahmen der Erfindung fallen zudem sämtliche Kombinationen aus mindestens zwei in der Beschreibung, den Ansprüchen und/oder den Figuren offenbarten Merkmalen. Es versteht sich, dass die zu dem Portionsbeutel gemachten Ausführungen sich in äquivalenter Weise auf die erfindungsgemäße Verpackungsmaschine beziehen, ohne für diese separat genannt zu werden. Hierbei versteht es sich insbesondere, dass sprachübliche Umformungen und/oder ein sinngemäßes Ersetzen von jeweiligen Begrifflichkeiten im Rahmen der üblichen sprachlichen Praxis, insbesondere das Verwenden von durch die allgemein anerkannte Sprachliteratur gestützten Synonymen, von dem vorliegenden Offenbarungsgehalt umfasst sind, ohne in ihrer jeweiligen Ausformulierung explizit erwähnt zu werden.

Gemäß einer bevorzugten Ausführungsform, kann eine Länge des Aufdrucks kleiner sein als ein Relativabstand der Verschlussnähte, wobei der Aufdruck auf der Sichtfläche zwischen den Verschlussnähten angeordnet sein kann. Der Aufdruck kann dann nicht ein dichtes Verschweißen der Verschlussnähte verhindern und gegebenenfalls eine Undichtigkeit des Portionsbeutels herbeiführen. Gleichzeitig kann der Aufdruck auch so bemessen sein, dass der verfügbare Platz zwischen den Verschlussnähten möglichst vollständig ausgenutzt wird. Bevorzugt ist der Aufdruck zentriert auf dem Portionsbeutel zwischen den Verschlussnähten angeordnet. Der Aufdruck kann auf mehreren Seiten, insbesondere auf Vorderseite und Rückseite des Portionsbeutels aufgebracht sein. Weiter bevorzugt ist der Aufdruck auf die Sichtfläche an der Vorderseite des Portionsbeutels zwischen den Verschlussnähten angeordnet. Die Vorderseite betrifft im Rahmen der Erfindung die Seite des Portionsbeutels, die frei von einer Schweißnaht ist, wohingegen die Schweißnaht bevorzugt an der Rückseite des Portionsbeutels angeordnet ist.

Der Aufdruck kann mittels Tintenstrahldruck auf dem Portionsbeutel aufgebracht sein. Dies lässt eine geeignete Verbindung zwischen der Folienbahn des Portionsbeutels, insbesondere wenn diese aus einem Vlies gebildet ist, zu, da die Lebensmittelfarbe tröpfchenweise auf den Portionsbeutel aufgebracht wird und in das Material der Folienbahn eindringen kann. Im Rahmen der Erfindung wird der Tintenstrahldruck als Digitaldruck umgesetzt, so dass das Druckbild direkt aus einer Datei oder einem Datenstrom von einem Computer in eine Druckeinrichtung übertragen wird, ohne dass ein Druckwerkzeug eingesetzt bzw. vorgehalten werden muss. Daher lässt die Aufbringung des Aufdrucks mittels Tintenstrahldrucks eine aufwandsarme sowie flexible Anpassung des Aufdrucks zu. Denn nicht nur das Design bzw. das Druckbild des aufzubringenden Etiketts kann in einfacher Art und Weise angepasst werden, sondern es können auch unterschiedliche Flüssigkeiten als Tinte zur Aufbringung mittels Tintenstrahldrucks eingesetzt werden und somit die Tinte auf das Material des Portionsbeutels bzw. der Folienbahn abgestimmt werden. Somit kann sichergestellt werden, dass die Tinte ausschließlich mit dem Material des Portionsbeutels bzw. der Folienbahn interagiert und nicht mit der Produktportion im Inneren des Portionsbeutels. Weiterhin kann der Aufdruck mittels Tintenstrahldruck bei geringer Temperatur aufgebracht werden, so dass eine Beschädigung des Portionsbeutels und/oder der Produktportion ausgeschlossen werden kann. Um eine Beschädigung des Portionsbeutels durch Aufschmelzen zu verhindern, wird die Lebensmittelfarbe bevorzugt mit einer Temperatur von unter 100° C aufgebracht. Zudem ist es vorteilhaft, dass eine Druckeinrichtung, die zur Aufbringung eines Aufdrucks mittels Tintenstrahldrucks ausgebildet ist, nur einen relativ geringen Bauraum benötigt und in Abhängigkeit der Einstellung der Tröpfchengröße eine relativ hohe Auflösung des Aufdrucks ermöglicht.

Der Aufdruck kann mehrfarbig ausgebildet sein. Hierzu werden bevorzugt bei Aufbringung des Aufdrucks mittels Tintenstrahldrucks Tinten aufweisend Lebensmittelfarben in den Farben Cyan, Magenta, Gelb sowie Schwarz verwendet. Mit anderen Worten kann bevorzugt ein Vierfarbdruck unter Verwendung des CMYK (Cyan, Magenta, Yellow, Key)-Farbmodells eingesetzt werden.

Die Schweißnaht kann als Überlappnaht oder als Umlegenaht ausgebildet sein. Sofern die Schweißnaht als Überlappnaht ausgebildet ist, ist die Folienbahn im Bereich der Schweißnaht überlappend angeordnet sein. Dies führt zu einer besonders sicheren Verschweißung der Folienbahn, da die Folienbahn im Bereich der Schweißnaht mehrlagig übereinanderliegend angeordnet ist und im Bereich der Überlappung verschweißt ist. Alternativ ist es denkbar, dass die Schweißnaht als Umlegenaht ausgebildet ist. Eine Umlegenaht, bei der die Innenflächen der Folienbahn aufeinandergelegt und anschließend umgelegt werden, ist auch als Finn-Siegelung bekannt. Eine Überlappnaht oder eine Umlegenaht gewährleistet eine widerstandsfähige Verschweißung der Folienbahn, insbesondere gegenüber der Verschweißung aneinanderstoßender Längskanten der Folienbahn.

Es ist denkbar, dass die Schweißnaht eine Seitenkante des Portionsbeutels ausbilden kann. Der Portionsbeutel kann in einem Querschnitt eine im Wesentlichen rechteckförmige bzw. ellipsenförmige Kontur ausbilden. Bezogen auf den Querschnitt kann die Schweißnaht so angebracht sein, dass diese eine äußere Seitenkannte des Portionsbeutels ausbildet.

Die Schweißnaht kann auch entlang eines Mittenbereiches einer Längsseite des Portionsbeutels ausgebildet sein. Bezogen auf einen Querschnitt des Portionsbeutels kann dann die Schweißnaht im Wesentlichen in einer Mitte einer der Längsseiten des Portionsbeutels ausgebildet sein. Bei dieser Anordnung der Schweißnaht kann der Portionsbeutel mit einem vergleichsweise großen Volumen befüllt werden.

Alternativ kann die Schweißnaht entlang einer Längsseite und angrenzend an eine Schmalseite des Portionsbeutels ausgebildet sein. Die Schmalseite kann dann eine Seitenkannte des Portionsbeutels, bezogen auf einen Querschnitt des Portionsbeutels, ausbilden. Weiter kann vorgesehen sein, dass die Schweißnaht an der Längsseite gefaltet ist. Die gefaltete Schweißnaht kann an den Verschlussnähten mit diesen überdeckend verschweißt sein. Die Schweißnaht kann so in einer gefalteten Position fixiert sein.

Die Schweißnaht kann 0,01 mm bis 5 mm breit sein. Es versteht sich, dass sich die Breite der Schweißnaht quer zu deren Längserstreckung erstreckt. Bevorzugt ist die Schweißnaht maximal 1 mm breit, so dass eine möglichst große Sichtfläche des Portionsbeutels, die nicht von der Schweißnaht beeinträchtigt wird, für den Aufdruck zur Verfügung steht.

Der Portionsbeutel kann aus einem Kunststoffvlies oder einem Papiervlies ausgebildet sein. Ein Kunststoffvlies oder Papiervlies bietet den Vorteil der einfachen und kostengünstigen Herstellung und der anforderungsgemäßen Aufnahme der Lebensmittelfarbe, insbesondere, wenn diese mittels Tintenstrahldruck aufgebracht wird. Es ist denkbar, dass das Kunststoffvlies einen Papieranteil aufweist oder das Papiervlies einen Kunststoffanteil aufweist.

Die Produktportion kann als ein Pulver, ein Granulat oder zumindest eine Tablette ausgebildet sein. Insbesondere kann die Produktportion ein pharmazeutisches Produkt oder ein Genussmittel umfassen. Bevorzugt ist die Produktportion als Pulver oder Granulat ausgebildet.

Gemäß einer bevorzugten Ausführungsform weist die Produktportion einen Trägerstoff und einen Wirkstoff auf. Der Wirkstoff kann ein Aromastoff sein. Bevorzugt umfasst der Trägerstoff Maisstärke, Stärke, Acacia, Maltodextrin, Polyvinylpyrrolidon (PVD) und/oder Calciumcarbonat und/oder eine Mischung der genannten Trägerstoffe. Der Wirkstoff kann bevorzugt Cannabidiol (CBD), Nikotin, Koffein, Guarana, Kaffee, Kräuter und/oder Tabak und/oder Mischungen der genannten Wirkstoffe umfassen. Tabak kann vorteilhafterweise in geschnittener oder gemahlener Form der Produktportion zugesetzt werden. Kaffee kann bevorzugt in Form von Kaffeepulver eingesetzt werden.

Gemäß einer vorteilhaften Ausführungsform kann die Produktportion ein Füllgewicht von 0,1 Gramm bis 2 Gramm aufweisen. Weiter bevorzugt weist die Produktportion ein Füllgewicht von 0,2 bis 1,5 Gramm auf.

Der Portionsbeutel kann mit einer Länge in einem Bereich von 10 mm bis 70 mm und mit einer Breite in einem Bereich von 5 mm bis 50 mm ausgebildet sein, wobei der Aufdruck mit einer Breite in einem Bereich von 2 mm bis 50 mm ausgebildet sein kann. Die Breite und Länge des Aufdrucks kann dann an die Breite und Länge des Portionsbeutels und/oder der Kammer des Portionsbeutels vorteilhaft angepasst sein. Bevorzugt ist der Portionsbeutel mit einer Länge in einem Bereich von 10 mm bis 50 mm und mit einer Breite in einem Bereich von 8 mm bis 21 mm ausgebildet.

Die erfindungsgemäße Verpackungsmaschine dient zur Ausbildung von erfindungsgemäßen Portionsbeuteln. Bevorzugt weist die Verpackungsmaschine eine Druckeinrichtung zur Aufbringung des Aufdrucks auf den Portionsbeutel auf.

Die Verpackungsmaschine kann einen Rollenspender zur Abgabe einer bahnförmigen Folie, eine Formschulter zum Falten der Folie zu einem Portionsbeutel, eine Längsschweißeinrichtung zur Ausbildung der Schweißnaht an dem Portionsbeutel, ein Rohr zum Zuführen einer Produktportion in den längsverschweißten Portionsbeutel während oder nach eines Vorbeiführens der Folienbahn an der Längsschweißeinrichtung, und eine Querschweißeinrichtung zur Ausbildung der Verschlussnaht an den jeweiligen Enden des Portionsbeutels, umfassen. Weiter kann eine motorisch angetriebene Vorschubeinrichtung zur Förderung der Folienbahn in Förderrichtung der Folienbahn umfasst sein. Die Förderrichtung verläuft bevorzugt vom Rollenspender zur Querschweißeinrichtung.

Weiter kann die Verpackungsmaschine eine Druckeinrichtung zur Aufbringung eines Aufdrucks auf die Folienbahn vor der Zuführung der Produktportion und/oder der Passage der Querschweißeinrichtung umfassen. Prinzipiell ist es unerheblich, zu welchem Zeitpunkt der Aufdruck auf den Portionsbeutel aufgebracht wird und an welcher Stelle die Druckeinrichtung angeordnet ist. Jedoch kann die Aufbringung des Aufdrucks auf eine bereits gefüllte Kammer des Portionsbeutels die Aufbringung erschweren oder das Druckbild beeinträchtigen. Daher ist es im Rahmen der Erfindung als vorteilhaft erkannt worden, den Aufdruck vor Zuführen der Produktportion und/oder der Passage der Querschweißeinrichtung aufzubringen. Das heißt, dass die Druckeinrichtung in Förderrichtung der Folienbahn vor dem Rohr zum Zuführen der Produktportion angeordnet sein kann. Wird der Aufdruck vor Zuführen der Produktportion aufgebracht. kann der Aufdruck bis zur Zuführung der Produktportion bereits ausreichend getrocknet sein, so dass eine die Produktportion schädigende Beeinflussung der Produktportion durch den Aufdruck, insbesondere die Lebensmittelfarbe, ausgeschlossen werden kann. Weiter bevorzugt ist die Druckeinrichtung in Förderrichtung der Folienbahn zwischen Rollenspender zur Abgabe der bahnförmigen Folie und dem Rohr zum Zuführen einer Produktportion angeordnet. Noch mehr bevorzugt ist die Druckeinrichtung im Zulauf der Folienbahn, d.h. nach dem Rollenspender und vor der Formschulter im Zulauf angeordnet. Zur anforderungsgemäßen, insbesondere zentrierten, Aufbringung des Aufdrucks können der Rollenspender, die Vorschubeinrichtung zur Förderung der Folienbahn, die Längsschweißeinrichtung, die Querschweißeinrichtung und/oder die Druckeinrichtung synchronisiert sein. Bevorzugt sind die Vorschubeinrichtung, die Querschweißeinrichtung und die Druckeinrichtung synchronisiert, so dass die Aufbringung des Aufdrucks und die Ausbildung der Verschlussnähte derart erfolgen kann, dass der Aufdruck zwischenliegend, bevorzugt zentriert zwischen, den Verschlussnähten angeordnet ist. Mit anderen Worten sind die Vorschubeinrichtung, die Querschweißeinrichtung und die Druckeinrichtung derart synchronisiert, dass in Abhängigkeit bzw. aufgrund der Kenntnis der Vorschubgeschwindigkeit zuerst die Folienbahn mittels der Druckeinrichtung bedruckt werden kann und anschließend die Querschweißeinrichtung seitlich des Aufdrucks die Verschlussnähte ausbilden kann.

Die Druckeinrichtung kann derart ausgebildet sein, dass die Druckeinrichtung Lebensmittelfarbe, bevorzugt tröpfchenförmig, auf den Portionsbeutel zur Ausbildung des Aufdrucks aufbringt. Um die Lebensmittelfarbe in einfacher Art und Weise tröpfchenförmig auf den Portionsbeutel zur Erzeugung eines Aufdrucks aufzubringen, ist die Druckeinrichtung bevorzugt in der Art einer Tintenstrahldruckeinrichtung ausgebildet. Die Tintenstrahldruckeinrichtung kann Farbdüsen umfassen, über die die tröpfchenweise Abgabe der Lebensmittelfarbe erfolgt, um den Aufdruck zu erzeugen. Dabei ist es dem Fachmann bekannt, dass Tintenstrahldruckeinrichtungen auch als Tröpfchenstrahldruckeinrichtungen, Tintendruckeinrichtungen, Farbstrahldruckeinrichtungen und/oder Inkjet-Druckeinrichtungen bekannt sind.

Prinzipiell ist es unerheblich, in welcher Art und Weise die Produktportion dosiert und dem Portionsbeutel zugeführt wird. Jedoch hat es sich im Rahmen der Erfindung als vorteilhaft erwiesen, wenn eine Tellerdosiereinrichtung und/oder eine Schneckendosiereinrichtung zur Dosierung der Produktportion umfasst ist. Insbesondere bei erhöhtem Feuchtigkeitsgehalt der Produktportion können Probleme bei der Dosierung auftreten. Insbesondere kann es in unerwünschter Weise zu Anhaftungen des Produkts kommen. Daher hat es sich, insbesondere bei geringem Feuchtigkeitsgehalt des Produkts, als vorteilhaft erwiesen, eine Schneckendosiereinrichtung zur Dosierung einer Produktportion in die Portionsbeutel einzusetzen. Die Schneckendosierung bietet bei schonender Produktbehandlung eine hohe Dosiergenauigkeit und Ausgabeleistung. Bevorzugt wird die Schneckendosiereinrichtung bei einem Feuchtigkeitsgehalt des Produkts kleiner 20 % eingesetzt.

Bei einem Feuchtigkeitsgehalt der Produktportion größer 20 %, insbesondere zwischen 20 % und 36 %, kann eine Tellerdosierung mit den damit verbundenen Vorteilen eingesetzt werden. Weist die Produktportion einen Feuchtigkeitsgehalt größer 35 %, insbesondere zwischen 35 % und 60 % auf, hat sich eine Tellerdosiereinrichtung mit einer Ausblaseinrichtung als vorteilhaft zur Dosierung der Produktportion erwiesen.

Eine Tellerdosiereinrichtung kann eine drehbare Dosierplatte mit Dosierkammern aufweisen, in die jeweils eine vorbestimmte Produktmenge zur Portionierung einer Produktportion eingefüllt werden kann. Die drehbare Dosierplatte kann über einen die Dosierkammer verschließenden Schleifteller so bewegt werden, dass bei einer Überdeckung einer Dosierkammer mit einer Öffnung im Schleifteller eine Produktportion aus der Dosierkammer nach unten herausfällt. Alternativ ist es auch möglich, die Dosierkammer mittels einer Klappe oder eines Schiebers zu verschließen und/oder die Produktportion mittels eines Luftstoßes aus der Dosierkammer auszublasen.

Eine erfindungsgemäße Verpackungsmaschine kann mit einem Takt von mindestens 100 Portionsbeuteln pro Minute, weiter bevorzugt mit einem Takt von mindestens 400 Portionsbeuteln pro Minute und am meisten bevorzugt mit einem Takt von mindestens 450 Portionsbeuteln pro Minute betrieben werden. Das heißt mit anderen Worten, dass die erfindungsgemäße Verpackungsmaschine dazu eingerichtet ist, bevorzugt mindestens 300 befüllte Portionsbeutel, weiter bevorzugt mindestens 400 befüllte Portionsbeutel und am meisten bevorzugt mindestens 450 befüllte Portionsbeutel pro Minute auszugeben. Die Zuführung der Folienbahn ist dabei insbesondere an den Takt der Produktportionszuführung und/oder der Querschweißeinrichtung anzupassen. Mit anderen Worten können Querschweißeinrichtung, Dosiervorrichtung und/oder Vorschubeinrichtung der Folienbahn synchronisiert sein, um die gewünschte Menge an Portionsbeuteln pro Zeiteinheit auszugeben. Unabhängig von der Produktportion und der Art der Dosierung der Produktportion kann der Schlauch zur Ausbildung des Portionsbeutels bevorzugt aus einer einbahnig oder zweibahnig ausgebildeten Folienbahn geformt werden.

Die Tellerdosiervorrichtung kann aus einer Dosierplatte gebildet sein, in der zumindest eine Durchgangsöffnung angeordnet ist, die eine Dosierkammer ausbildet, wobei die Tellerdosiervorrichtung zudem eine Verschlusseinrichtung, die zum Verschließen einer Öffnungsseite der Durchgangsöffnung dient, und eine Befülleinrichtung, die zum Befüllen der Dosierkammer mit einer Produktportion dient, und eine Ausblaseinrichtung, die zum Ausblasen der Produktportion aus der Dosierkammer mittels Ausblasluft dient, aufweisen. Durch das Ausblasen mittels der Ausblaseinrichtung können Anhaftungen des Produkts an der Dosierkammer und somit eine ungenaue Dosierung vermieden werden. Es ist denkbar, dass mittels der Ausblaseinrichtung der Ausblasluft Wasserdampf hinzufügbar ist. Die mit Wasserdampf versehene Ausblasluft ermöglicht ein im Wesentlichen vollständiges Ausblasen der in der Dosierkammer befindlichen Produktportion bzw. ein Reinigen der Dosierkammer, ohne dass Produktreste an einer Innenwandung der Dosierkammer anhaften bzw. zurückbleiben. Das Ausblasen mittels der mit Wasserdampf versehenen Ausblasluft hat sich insbesondere bei einem Feuchtigkeitsgehalt der Produktportion zwischen 35 % und 60 % als vorteilhaft erwiesen. Auch ist es denkbar, dass die Dosierkammer zusätzlich oder alternativ mit einem Vakuum beaufschlagt werden kann. Hierzu kann die Dosierplatte eine luftdurchlässige Wandung aufweisen, durch die Luft aus der Dosierkammer entweichen kann. Wird die Dosierkammer beim Füllen der Dosierkammer mit einem Vakuum beaufschlagt, so kann sichergestellt werden, dass die Dosierkammer vollständig mit dem Produkt befüllt wird, ohne dass sich beispielsweise unerwünscht große Luftzwischenräume in der in der Dosierkammer befindlichen Produktportion ausbilden.

In einem weiteren Aspekt betrifft die Erfindung ein Verfahren zur Herstellung eines Portionsbeutels. Bevorzugt ist das Verfahren mit einer erfindungsgemäßen Verpackungsmaschine ausführbar. Bei dem Verfahren zur Ausbildung von Portionsbeuteln wird eine verschlossene Kammer des Portionsbeutels ausgebildet, in der eine, insbesondere zumindest teilweise flüssigkeitslösliche, Produktportion aufgenommen wird, wobei der Portionsbeutel aus, insbesondere ausschließlich aus, einer zu einem Schlauch geformten Folienbahn ausgebildet wird, wobei eine Schweißnaht in einer Längsrichtung entlang des Portionsbeutels ausgebildet wird, und wobei an Enden des Portionsbeutels jeweils Verschlussnähte ausgebildet werden, und wobei ein aus einer Lebensmittelfarbe ausgebildeter Aufdruck auf einer Sichtfläche des Portionsbeutels aufgebracht wird.

Der Aufdruck kann im Rahmen des Verfahrens derart auf die Sichtfläche des Portionsbeutels aufgebracht werden, dass die Lebensmittelfarbe ausschließlich mit dem aus der Folienbahn geformten Portionsbeutel zusammenwirkt. Dadurch, dass die Lebensmittelfarbe somit lediglich auf den Portionsbeutel aufgebracht wird und nicht mit der Produktportion im Inneren des Portionsbeutels in Kontakt kommt, kann eine Beeinträchtigung des Inhalts des Portionsbeutels, insbesondere wenn die Produktportion zumindest teilweise wasserlöslich ist, ausgeschlossen werden. Bevorzugt wird der Aufdruck derart aufgebracht, dass die Lebensmittelfarbe eine stoffschlüssige Verbindung mit dem Portionsbeutel, insbesondere an dessen Sichtfläche, eingeht.

Weitere vorteilhafte Ausführungsformen des Verfahrens ergeben sich aus den Merkmalsbeschreibungen der auf den Portionsbeutel und/oder die Verpackungsmaschine bezogenen Ansprüche.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen. Ebenfalls versteht es sich, dass die zuvor genannten und nachstehend noch zu erläuternden Ausführungsformen und Ausführungsbeispiele sich in äquivalenter oder zumindest ähnlicher Art und Weise auf den erfindungsgemäßen Portionsbeutel bzw. auf die Verpackungsmaschine und das Verfahren beziehen, ohne dass deren separate Nennung erforderlich ist.

Ausführungsformen der Erfindung sind in den Zeichnungen schematisiert dargestellt und werden nachfolgend beispielhaft erläutert. Es zeigen:
- **Fig. 1**: einen erfindungsgemäßen Portionsbeutel in Ansicht von hinten;
- **Fig. 2**: einen erfindungsgemäßen Portionsbeutel gemäß **Fig. 1** in Ansicht von vorne;
- **Fig. 3**: einen Querschnitt durch den erfindungsgemäßen Portionsbeutel gemäß **Fig. 1** entlang der Schnittlinie I-I in **Fig. 1****;**
- **Fig. 4**: einen Querschnitt durch eine weitere Ausführungsform eines erfindungsgemäßen Portionsbeutels mit Überlappnaht;
- **Fig. 5**: einen Querschnitt durch einen erfindungsgemäßen Portionsbeutel mit Umlegenaht;
- **Fig. 6**: einen Querschnitt durch eine weitere Ausführungsform eines erfindungsgemäßen Portionsbeutels mit Umlegenaht; und
- **Fig. 7**: einen Querschnitt durch einen erfindungsgemäßen Portionsbeutel mit einer an einer Schmalseite angeordneten Schweißnaht.

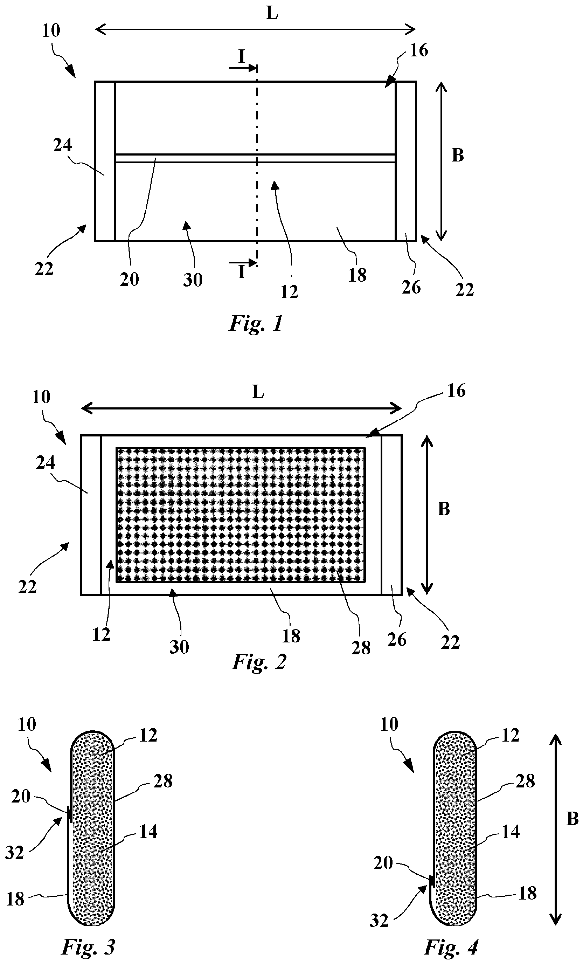

Eine Zusammenschau der **Fig. 1 und 2** zeigt einen Portionsbeutel 10, der ausschließlich aus einer einzigen zu einem Schlauch 16 geformten Folienbahn 18 ausgebildet ist. Eine Schweißnaht 20 ist in einer Längsrichtung entlang der Länge L des Portionsbeutels 10 in einem Mittenbereich der Rückseite des Portionsbeutels 10 ausgebildet und verbindet so die Folienbahn 18 an deren Seitenkanten. An jeweiligen Enden 22 des Portionsbeutels 10 sind Verschlussnähte 24 und 26 durch Verschweißen der Folienbahn 18 ausgebildet. Der Portionsbeutel 10 ist folglich mit einer dicht abgeschlossenen Kammer 12 zur Aufnahme einer Produktportion 14, die in **Fig. 3 bis 7** ersichtlich ist, ausgebildet. Sowohl auf der in **Fig. 1** gezeigten Rückseite als auch in der in **Fig. 2** gezeigten Vorderseite des Portionsbeutels 10 kann eine Sichtfläche 30 ausgebildet sein, auf der ein Aufdruck 28 aufgebracht werden kann. Gemäß vorliegender Ausführungsform ist auf der Sichtfläche 30 auf der Vorderseite des Portionsbeutels 10 ein Aufdruck 28 angeordnet. Aus einer Zusammenschau der **Fig. 1** und **2** ist ersichtlich, dass im Rahmen der Erfindung der Begriff "Rückseite des Portionsbeutels" die Seite des Portionsbeutels betrifft, an der die Schweißnaht 20 angeordnet ist und die Vorderseite entsprechend keine Schweißnaht aufweist.

Aus **Fig. 2** geht hervor, dass der Aufdruck 28 zwischenliegend den Verschlussnähten 24 und 26 angeordnet ist und die Länge des Aufdrucks 28 kleiner ist als ein Relativabstand der Verschlussnähte 24 und 26. Konkret ist der Aufdruck 28 bezogen auf die Länge L und Breite B des Portionsbeutels 10 zentriert auf die Sichtfläche 30 des Portionsbeutels 10 aufgebracht.

**Fig. 3** zeigt den erfindungsgemäßen Portionsbeutel 10 gemäß **Fig. 1** im Querschnitt geschnitten entlang der Schnittlinie I-I. Der Schnittansicht kann entnommen werden, dass die Kammer 12 mit einer Produktportion 14 gefüllt ist. Um eine besonders sichere Verbindung der Seitenkanten der Folienbahn 18 zu gewährleisten ist die Folienbahn 18 im Bereich der Schweißnaht 20 überlappend gelegt. Die Überlappung 32 im Bereich der Schweißnaht 20 ermöglicht ein einfaches und sicheres Verschweißen der Folienbahn 18 zur Ausbildung der Kammer 12.

**Fig. 4** zeigt eine weitere Ausführungsform eines erfindungsgemäßen Portionsbeutels 10, wobei die Überlappung 32 der als Überlappnaht ausgebildeten Schweißnaht 20 bezogen auf eine Breite B des Portionsbeutels 10 außermittig angeordnet ist.

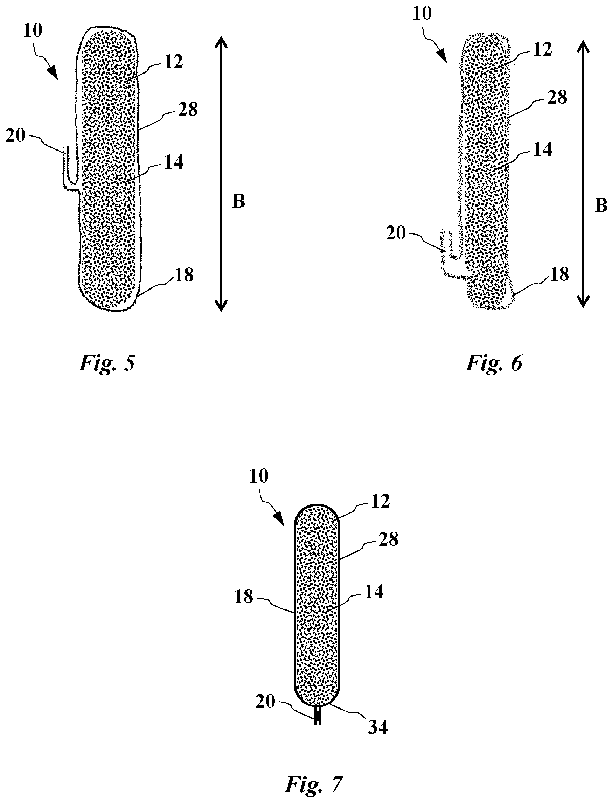

Gemäß der mit **Fign. 5 und 6** gezeigten Ausführungsformen ist die Schweißnaht 20 des Portionsbeutels 10 als Umlegenaht ausgebildet. Die Innenseiten der Folienbahn 18 sind zur Ausbildung der Umlegenaht zuerst aufeinandergelegt und anschließend umgelegt worden. Die als Umlegenaht ausgebildete Schweißnaht 20 kann bezogen auf die Breite B des Portionsbeutels 10 mittig, wie in Fig. 5 gezeigt, oder außermittig, wie in Fig. 6 gezeigt, angeordnet sein.

Gemäß der in **Fig. 7** gezeigten Ausführungsform des Portionsbeutels 10 kann die Schweißnaht 20 an einer Schmalseite 34 des Portionsbeutels 10 angeordnet sein.

## Patentansprüche

1. Portionsbeutel (10) ausbildend eine verschlossene Kammer (12), in der eine, insbesondere zumindest teilweise flüssigkeitslösliche, Produktportion (14) aufgenommenen ist, wobei der Portionsbeutel (10) aus einer zu einem Schlauch (16) geformten Folienbahn (18) ausgebildet ist, wobei eine Schweißnaht (20) in einer Längsrichtung entlang des Portionsbeutels (10) ausgebildet ist, und wobei an Enden (22) des Portionsbeutels (10) jeweils Verschlussnähte (24, 26) ausgebildet sind,
**dadurch gekennzeichnet,**
**dass** ein aus einer Lebensmittelfarbe ausgebildeter Aufdruck (28) auf zumindest eine Sichtfläche (30) des Portionsbeutels (10) aufgebracht ist.

2. Portionsbeutel nach Anspruch 1,
**dadurch gekennzeichnet,**
**dass** eine Länge des Aufdrucks (28) kleiner ist als ein Relativabstand der Verschlussnähte (24, 26), wobei der Aufdruck (28) zwischenliegend den Verschlussnähten (24, 26) angeordnet ist.

3. Portionsbeutel nach Anspruch 1 oder 2,
**dadurch gekennzeichnet,**
**dass** der Aufdruck (28) mittels Tintenstrahldruck aufgebracht ist.

4. Portionsbeutel nach einem der vorangehenden Ansprüche,
**dadurch gekennzeichnet,**
**dass** die die Schweißnaht (20) als Überlappnaht oder als Umlegenaht ausgebildet ist.

5. Portionsbeutel nach einem der vorangehenden Ansprüche,
**dadurch gekennzeichnet,**
**dass** der Portionsbeutel (10) aus einem Kunststoffvlies oder einem Papiervlies ausgebildet ist.

6. Portionsbeutel nach einem der vorangehenden Ansprüche,
**dadurch gekennzeichnet,**
**dass** die Produktportion (14) als ein Pulver, ein Granulat oder zumindest eine Tablette ausgebildet ist.

7. Portionsbeutel nach einem der vorangehenden Ansprüche,
**dadurch gekennzeichnet,**
**dass** die Produktportion (14) einen Trägerstoff, insbesondere umfassend Maisstärke, Stärke, Acacia, Maltodextrin, Polyvinylpyrrolidon und/oder Calciumcarbonat, und einen Wirkstoff, insbesondere umfassend Cannabidiol, Nikotin, Koffein, Guarana, Kaffee, Kräuter und/oder Tabak, aufweist.

8. Verpackungsmaschine zur Ausbildung von Portionsbeuteln (10) nach einem der vorangehenden Ansprüche.

9. Verpackungsmaschine nach Anspruch 8,
**dadurch gekennzeichnet,**
**dass** die Verpackungsmaschine einen Rollenspender zur Abgabe einer Folienbahn (18), eine Formschulter zum Falten der Folienbahn (18) zu einem Portionsbeutel (10), eine Längsschweißeinrichtung zur Ausbildung der Schweißnaht (20) an dem Portionsbeutel (10), ein Rohr zum Zuführen einer Produktportion (14) in den längs verschweißten Portionsbeutel (10) während oder nach eines Vorbeiführens der Folienbahn (18) an der Längsschweißeinrichtung, und eine Querschweißeinrichtung zur Ausbildung der Verschlussnaht (24, 26) an den jeweiligen Enden (22) des Portionsbeutels (10), umfasst.

10. Verpackungsmaschine nach Anspruch 9,
**dadurch gekennzeichnet,**
**dass** die Verpackungsmaschine eine Druckeinrichtung zur Aufbringung eines Aufdrucks (28) auf die Folienbahn (18) vor der Zuführung der Produktportion (14) und/oder der Passage der Querschweißeinrichtung umfasst.

11. Verpackungsmaschine nach Anspruch 10,
**dadurch gekennzeichnet,**
**dass** die Druckeinrichtung Lebensmittelfarbe, insbesondere tröpfchenförmig, auf den Portionsbeutel (10) aufbringt.

12. Verpackungsmaschine nach einem der Ansprüche 8 bis 11,
**dadurch gekennzeichnet,**
**dass** eine Tellerdosiereinrichtung und/oder eine Schneckendosiereinrichtung zur Dosierung der Produktportion (14) umfasst ist.

13. Verpackungsmaschine nach Anspruch 12,
**dadurch gekennzeichnet,**
**dass** die Tellerdosiereinrichtung eine Dosierplatte (12, 52, 79) aufweist, in der zumindest eine Durchgangsöffnung (16, 53, 81) angeordnet ist, die eine Dosierkammer (17, 18, 19, 59, 82, 83) ausbildet, und
eine Verschlusseinrichtung, die zum Verschließen einer Öffnungsseite der Durchgangsöffnung dient, und
eine Befülleinrichtung (14), die zum Befüllen der Dosierkammer mit einer Produktportion (14) dient, und
eine Ausblaseinrichtung, die zum Ausblasen der Produktportion (14) aus der Dosierkammer mittels Ausblasluft dient, aufweist.

14. Verfahren zur Ausbildung eines Portionsbeutels nach Anspruch 1 mit einer Verpackungsmaschine,
wobei eine verschlossene Kammer des Portionsbeutels ausgebildet wird; und
in die Kammer eine, insbesondere zumindest teilweise flüssigkeitslösliche, Produktportion eingebracht wird; und
der Portionsbeutel aus, insbesondere ausschließlich aus, einer zu einem Schlauch geformten Folienbahn ausgebildet wird; und
eine Schweißnaht in einer Längsrichtung entlang des Portionsbeutels ausgebildet wird; und
an Enden des Portionsbeutels jeweils Verschlussnähte ausgebildet werden; und
ein aus einer Lebensmittelfarbe ausgebildeter Aufdruck auf einer Sichtfläche des Portionsbeutels aufgebracht wird.

15. Verfahren nach Anspruch 14,
wobei der Aufdruck derart auf die Sichtfläche des Portionsbeutels aufgebracht, dass die Lebensmittelfarbe ausschließlich mit dem aus der Folienbahn geformten Portionsbeutel zusammenwirkt.
